# FASCICULE DE BREVET EUROPEEN

(11) **EP 1 246 738 B1**
(45) Date de publication et mention de la délivrance du brevet: **04.03.2009**
(21) Numéro de dépôt: 99958295.0
(22) Date de dépôt: 10.12.1999
(51) Int. Cl.: B60N 3/02, F16B 5/06

(54) **POIGNEE ARTICULEE POUR HABITACLE DE VEHICULE AUTOMOBILE ET PAVILLON DE VEHICULE AUTOMOBILE ASSOCIE**
GELENKTER GRIFF FÜR KRAFTFAHRZEUG-INNENRAUM UND ENTSPRECHENDES DACH
HINGED HANDLE FOR THE INTERIOR OF AN AUTOMOBILE VEHICLE AND ASSOCIATED ROOF

(43) Date de publication de la demande: 09.10.2002
(73) Titulaire: RENAULT S.A.S., 92100 Boulogne Billancourt (FR)
(72) Inventeur: PONCEAU, Philippe, F-78610 Le Perray en Yvelines (FR)
(86) Numéro de dépôt international: PCT/FR1999/003093
(87) Numéro de publication internationale: WO 2001/042041

(56) Documents cités:
- EP-A- 0 346 156
- EP-A- 0 685 359
- WO-A-96/17178
- DE-C- 4 404 972
- FR-A- 2 764 010
- GB-A- 2 055 421
- US-A- 5 403 064
- US-A- 5 920 957

## Description

La présente invention est relative à une poignée articulée, notamment pour habitacle de véhicule automobile et à un pavillon de véhicule automobile.

On trouve couramment de telles poignées dans les habitacles de véhicules automobiles, en partie haute de ces habitacle, pour permettre aux passagers de se stabiliser quand le véhicule subit des mouvements de tangage, roulis ou lacet, comme c'est le cas par exemple quand le véhicule progresse dans une suite de virages.

Ces poignées doivent donc être fixées très solidement au toit de l'habitacle. La pose et la fixation de ces poignées exigent des opérations, manuelles ou robotisées, qui s'opèrent dans un espace exigu, celui de l'habitacle.

Une poignée selon le préambule de la revendication 1 et un pavillon selon le préambule de la revendication 4 est connu de EP-A-0 346 156.

La présente invention a précisément pour but de fournir une poignée articulée présentant une structure conçue pour simplifier les opérations nécessaires à son montage dans l'habitacle d'un véhicule automobile.

La présente invention a aussi pour but de fournir un procédé de montage de cette poignée permettant, éventuellement et avantageusement, de combiner les montages dans l'habitacle de la poignée, d'une garniture de toit et de sacs gonflables (appelés couramment "air-bags") de protection des passagers en cas de chocs.

On atteint ces buts de l'invention, ainsi que d'autres qui apparaîtront à la lecture de la description qui va suivre, avec une poignée articulée, notamment pour habitacle de véhicule automobile, selon la revendication 1 et avec un pavillon selon la revendication 4.

Comme on le verra plus loin, l'utilisation de la poignée comme percuteur, lors de la fixation de celle-ci, permet de simplifier les manoeuvres ou l'outillage nécessaires au montage de la poignée. Par ailleurs, l'utilisation de moyens de cheville expansibles pour fixer la poignée donne à celle-ci une résistance à l'arrachement exceptionnellement élevée, favorable à la sécurité des passagers.

Suivant d'autres caractéristiques de la poignée selon la présente invention, celle-ci comprend deux organes de fixation articulés chacun à l'une de deux extrémités de l'anse, lesdits organes de fixation comprenant des moyens permettant de retenir temporairement les moyens de clou dans leur première position.

Pour monter cette poignée sur un support, on engage chaque organe de fixation dans un trou du support, le moyen de clou étant monté dans sa première position sur le moyen de cheville dudit organe, et on bascule l'anse de la poignée sur la tête du moyen de clou pour faire passer celui-ci par percussion dans sa deuxième position, où il provoque l'expansion et le blocage du moyen de cheville dans ledit trou.

Lorsqu'on applique ce procédé à un support formant partie de l'habitacle d'un véhicule automobile comprenant un pavillon conçu pour être doublé d'une garniture de toit, on monte, à l'extérieur de l'habitacle, plusieurs poignées sur ladite garniture en engageant les moyens de cheville de ces poignées dans des perçages de la garniture, on introduit l'ensemble ainsi constitué dans l'habitacle en engageant les moyens de cheville dans des trous de l'habitacle prévus pour les recevoir, et on bascule les poignées pour commander par percussion l'expansion et le blocage des moyens de cheville dans lesdits trous.

L'invention permet ainsi de réaliser un pavillon de véhicule automobile comprenant une garniture fixée à proximité de la façade intérieure du toit du véhicule, au moyen desdites poignées. Le pavillon comprend en outre au moins un sac gonflable installé entre la garniture et le toit au voisinage d'un bord latéral de la garniture, ledit sac gonflable étant fixé sur ladite garniture par au moins une patte frangible.

D'autres caractéristiques et avantages de la présente invention apparaîtront à la lecture de la description qui va suivre et à l'examen du dessin annexé dans lequel :
- la figure 1 est une vue perspective de la poignée suivant l'invention,
- les figures 2 et 3 sont des vues en coupe de la poignée de la figure 1, expliquant le procédé de montage de cette poignée,
- les figures 4 et 5 sont des vues schématiques, en plan et en élévation latérale, respectivement, d'un véhicule automobile équipé de sacs gonflables de protection latérale,
- la figure 6 est une vue perspective de la garniture du toit du véhicule des figures 4 et 5,
- les figures 7 et 8 sont des vues de détail, en coupe, de moyens de fixation utilisés suivant l'invention, et
- la figure 9 est une vue de détail d'une extrémité d'une cheville formant partie de la poignée suivant l'invention.

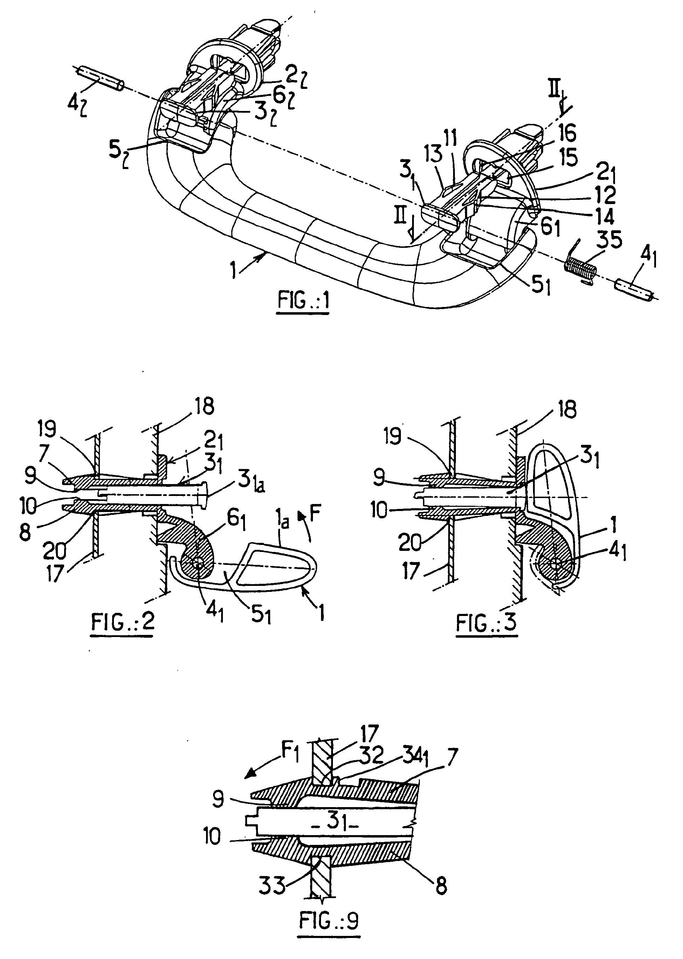

On se réfère à la figure 1 du dessin annexé où il apparaît que la poignée suivant l'invention comprend une anse 1, par exemple en forme de "C", à chacune des deux extrémités de laquelle est articulé l'un de deux organes de fixation identiques, constitués respectivement par des moyens de cheville, ou chevilles 2₁,2₂ et par des moyens de clou, ou clous 3₁, 3₂.

Les chevilles 2₁,2₂ sont du type "expansible", l'expansion des chevilles étant provoquée par le forçage, dans un canal intérieur à la cheville, de "clous" 3₁,3₂ respectivement. Les chevilles et les clous conçus pour la mise en oeuvre de la présente invention présentent, comme on le verra plus loin, des caractéristiques spécifiques qui les écartent sensiblement des organes plus simples que l'on désigne couramment sous ces noms.

En premier lieu, les chevilles 2₁, 2₂ comprennent des moyens d'articulation sur l'anse 1, ces moyens étant constitués par des axes 4₁,4₂ respectivement montés dans des évidements 5₁,5₂ des extrémités de l'anse 1 et traversant des extensions latérales 6₁,6₂ respectivement de ces chevilles. L'extension 6₁ de la cheville 2₁ et l'évidement 5₁ de l'anse 1 sont plus visibles sur la coupe de la figure 2, prise suivant le trait de coupe II de la figure 1.

Sur la figure 2, il apparaît que la cheville 2₁, par exemple, comprend deux pattes généralement parallèles 7,8 délimitant entre elles un canal dans lequel peut passer le clou 3₁. Ce clou est représenté à la figure 2 dans une première position, ou position d'attente, où il reste écarté de deux portées 9,10 formées sur les extrémités libres de pattes 7,8 respectivement, et débordant vers l'intérieur de la cheville.

Les clous 3₁,3₂ comportent des moyens permettant de définir cette position d'attente. Ces moyens sont constitués par deux ponts élastiques référencés 11,12 sur la cheville 3₁ de la figure 1, disposés symétriquement et latéralement sur la cheville, ces ponts portant en leur milieu une rainure 13,14 respectivement, agencée pour s'enclencher élastiquement sur une nervure 15,16, respectivement, formée à l'entrée de la cheville correspondante. La coopération de ces rainures et nervures définit alors précisément la position axiale du clou 3₁, dans la position d'attente représentée à la figure 2, où il doit être retenu temporairement comme on le verra plus loin.

Pour monter la poignée de la figure 1 sur un support constitué, comme représenté aux figures 2 et 3 par exemple, par une tôle 17 et une surface d'appui 18 percées de trous autorisant le passage des pattes 7,8 des chevilles 2₁,2₂ moyennant un léger fléchissement de celles-ci vers l'intérieur de la cheville, on engage à force les chevilles 2₁,2₂ à travers ces trous, alors que les clous 3₁,3₂ restent dans la position d'attente représentée à la figure 2.

Sur cette figure 2, on remarque que les extrémités libres des pattes 7,8 présentent des facettes extérieures inclinées symétriquement vers l'intérieur de la cheville 2₁, pour faciliter leur passage dans les trous du support, ces facettes étant délimitées par des crans 19,20 disposés axialement de manière à pouvoir s'accrocher sur le bord du trou percé dans la tôle 17.

La figure 2 fait apparaître aussi d'autres caractéristiques, essentielles, de la présente invention, à savoir que l'anse 1 est configurée de manière à présenter un élément de surface la agencé à une distance de l'axe 4₁ de rotation de cette anse sensiblement égale à celle qui sépare cet axe de la tête 3₁ₐ du clou 3₁, dans sa position d'attente.

Ainsi, en imprimant à l'anse 1, à partir de la position représentée à la figure 2, une rotation dans le sens de la flèche F, on comprend que l'élément de surface la de cette anse vient porter sur la tête 3₁ₐ du clou 3₁. En communiquant alors à l'anse 1 une force vive adéquate, cette anse percute le clou 3₁ avec une énergie suffisante pour faire passer ce dernier de sa position d'attente à une deuxième position, représentée à la figure 3, où son extrémité passe entre les portées 9 et 10 des pattes 7,8 respectivement, pour repousser ces dernières vers l'extérieur. Cette "expansion" de la cheville 2₁ met en prise les crans 19,20 avec le bord du trou percé dans la tôle 17. Cette cheville s'appuyant par ailleurs sur la surface d'appui 18, elle se trouve positivement et fermement immobilisée sur le support (17,18), en assurant ainsi la fixation sur celui-ci de l'anse dont elle est solidaire, par l'intermédiaire de l'axe 4₁ et de son extension latérale 6₁.

On comprend que l'intégration, dans la poignée suivant l'invention, de moyens qui coopèrent au développement de l'effort de percussion nécessaire pour monter la poignée sur son support, simplifie considérablement les opérations de montage de cette poignée, que celle-ci soit alors manoeuvrée manuellement ou par des robots. Ceci est très favorable à l'abaissement du coût de ces opérations.

Des essais ont montré, par ailleurs, qu'une telle fixation par cheville expansible permet de donner à l'anse une résistance à l'arrachement de 160 daN environ, très supérieure à celle obtenue à l'aide d'une fixation classique par vis, ce qui est favorable à la sécurité des passagers quand une telle poignée est montée dans l'habitacle d'une véhicule automobile.

L'utilisation de la poignée suivant la présente invention permet, dans un tel véhicule, de simplifier les opérations de montage d'une garniture de toit sur le pavillon de l'habitacle, que ce montage soit associé, ou non, à celui de sacs gonflables de sécurité, couramment montés actuellement dans les véhicules automobiles suivant diverses procédures, dont celle décrite dans EP0791 511.

On connaît de ce document un véhicule automobile comprenant une garniture de toit et, fixés entre les bords latéraux respectifs de cette garniture et du toit, des sacs gonflables pliés, couramment appelés "air-basgs", associés à des générateurs de gaz qui les gonflent en cas de chocs pour qu'ils se déploient hors de leur espace de rangement et protègent alors les passagers du véhicule, notamment en cas de chocs latéraux. Pour installer le matériel décrit dans ce document, il convient de fixer sur le toit tout d'abord les sacs gonflables et les générateurs de gaz associés, puis la garniture de toit qui les recouvre. Ces opérations sont mal commodes, même pour des robots, car elles doivent être exécutées à l'intérieur de l'espace étroit que constitue l'habitacle du véhicule.

La présente invention a précisément pour but de fournir aussi un procédé de montage de sacs gonflables de protection latérale des passagers d'un véhicule automobile, qui soit de mise en oeuvre plus aisée que celui décrit ci-dessus et qui permette donc d'abaisser le coût de cette opération.

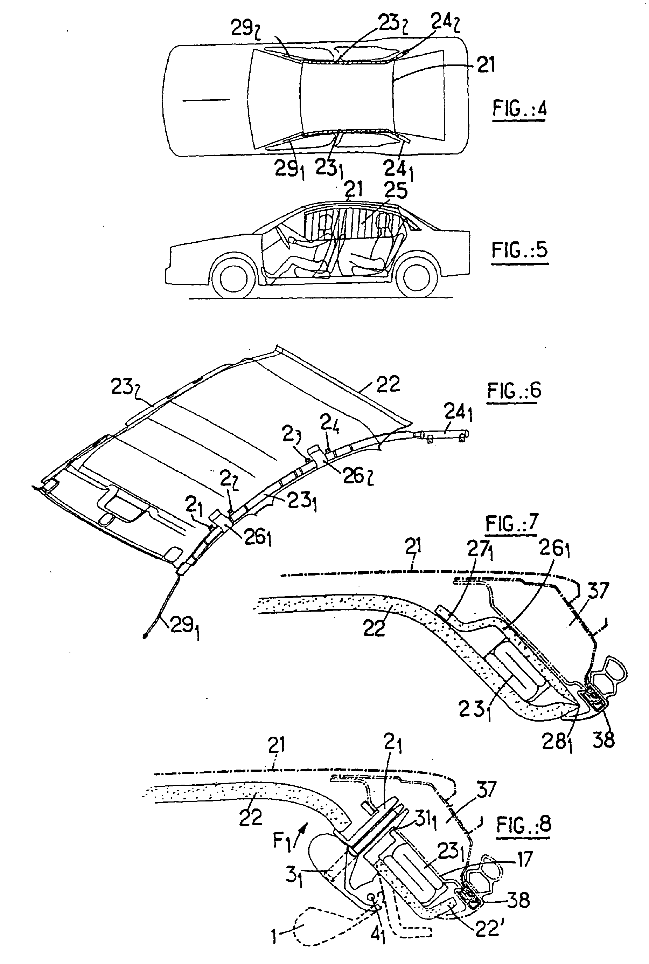

On va décrire ce procédé suivant l'invention en se référant aux figures 4 à 9 du dessin annexé, où il apparaît que le véhicule représenté comprend un pavillon constitué par un toit 21 doublé classiquement d'une garniture 22, comme cela apparaît plus clairement sur les vues en coupe transversale du pavillon, présentées aux figures 7 et 8.

La garniture 22 peut être réalisée en un matériau d'isolation thermique et/ou phonique, tel qu'un feutre ou une mousse de matière plastique, et prend une forme généralement rectangulaire, légèrement cintrée pour suivre les courbures du toit, comme représenté à la figure 6.

Comme représenté aux figures 4 et 6, le véhicule est équipé d'au moins un, et de préférence d'au moins deux sacs gonflables 23₁,23₂ pliés en accordéon par exemple (voir la figure 6) de manière à prendre une forme extérieure allongée, ces sacs étant montés chacun au voisinage d'un des bords latéraux de la garniture 22.

Chacun des sacs 23₁,23₂ peut être sélectivement gonflé par un générateur de gaz 24₁,24₂, respectivement, raccordé en bout de sac comme représenté à la figure 6, et activé par un choc subi par le véhicule. Les sacs gonflés se déploient alors dans l'habitacle du véhicule, au long de ses parois latérales dans des espaces tels que celui hachuré et référencé 25 à la figure 5, de manière à protéger, notamment, les têtes de passagers contre des chocs sur les vitres latérales où les montants de l'habitacle du véhicule. Ces dispositifs sont bien connus de l'homme de métier et ne sont donc pas décrits ici en plus de détails.

Suivant la présente invention, le montage des sacs gonflables 23₁,23₂ et de la garniture du toit dans l'habitacle du véhicule s'opère en deux temps. Dans un premier temps, on monte les sacs 23₁,23₂ sur la garniture, alors que celle-ci est à l'extérieur du véhicule, ce qui rend cette opération commode.

Pour fixer le sac 23₁, par exemple, sur la garniture 22, on dispose celui-ci au-dessus d'un bord latéral de cette garniture et on rabat sur celle-ci, par dessus le sac allongé 23₁, au moins une, et de préférence deux pattes de fixation frangibles 26₁,26₂ (voir figure 6) dont les extrémités sont collées sur la garniture, par exemple à l'aide d'un morceau d'adhésif double face tel que celui référencé 27₁ sur la vue en coupe transversale de la figure 7, prise au niveau de la patte 26₁.

Suivant un mode de réalisation avantageux de la présente invention, les pattes 26₁, 26₂ peuvent déborder initialement de la garniture et être venues de matière avec elle, les pattes étant raccordées à la garniture par une ligne de pliure frangible, pour un but que l'on expliquera plus loin.

La garniture 22 est alors équipée de sacs gonflables 23₁,23₂, de deux générateurs de gaz 24₁,24₂ associés respectivement, et de deux liens 29₁,29₂ respectivement fixés chacun à l'extrémité du sac associé qui est opposé à celle qui reçoit le générateur de gaz (voir figures 4 et 6).

Suivant l'invention, on monte encore sur la garniture, par exemple au niveau des pattes 26₁,26₂ en ce qui concerne le sac 23₁ (voir figure 6), deux poignées "hautes" suivant l'invention, de manière que les chevilles 2₁,2₂ et 2₃,2₄ de ces poignées traversent des trous correspondants percés dans la garniture pour être temporairement retenues par cette garniture.

L'ensemble monobloc ainsi constitué peut alors être transporté d'une pièce pour être introduit dans l'habitacle du véhicule et fixé sur le toit 21 de ce véhicule comme représenté aux figures 7 et 8, dans un deuxième temps du procédé suivant la présente invention.

Pour ce faire, on installe, manuellement ou à l'aide d'un robot, la garniture ainsi équipée dans l'habitacle du véhicule de manière que les chevilles 2ᵢ viennent chacune en repérage avec un trou 31ᵢ, comme c'est le cas de la cheville 3₁ et du trou 31₁ représenté sur la figure 8, qui est une vue partielle en coupe transversale de la garniture 22 prise au niveau de la cheville 2₁. Les trous 31ⱼ peuvent être percés dans une poutre creuse latérale 37 solidaire du toit 21 et jouant, avec la garniture 22, le rôle du support 17,18 des figures 2 et 3.

Comme représenté sur la figure 8, chaque cheville retient un clou tel que le clou 3₁.

Lors de la présentation de la garniture, dans l'habitacle, le clou 3₁ est dans sa position d'attente représentée en trait interrompu et l'extrémité de la cheville présente alors un diamètre qui permet de la passer dans le trou 31₁. Une fois les extrémités des chevilles 2ᵢ passées dans les trous correspondants, on percute les clous avec les anses des poignées, soit manuellement soit au moyen d'un robot, les clous passant dans la position représentée en trait plein à la figure 8. L'extrémité de la cheville associée est alors dilatée par le clou et se trouve bloquée dans celui-ci comme décrit en liaison avec les figures 2 et 3.

La garniture, les sacs gonflables et les poignées hautes sont ainsi installés instantanément dans leur position finale dans le véhicule. Il reste seulement à fixer les générateurs de gaz 24₁,24₂ et les liens 29₁,29₂ sur des montants correspondants de l'habitacle du véhicule.

On comprend maintenant que le procédé de montage décrit ci-dessus est particulièrement rapide et donc de mise en oeuvre économique, conformément aux buts annoncés. On remarquera en particulier que ce procédé supprime les manoeuvres malcommodes, car intérieures à l'habitacle, auparavant nécessaires pour fixer les sacs gonflables dans cet habitacle, avant la mise en place de la garniture de toit. On remarquera aussi que les chevilles de fixation des poignées hautes assurent également, de manière économique, la fixation des sacs et de la garniture dans l'habitacle.

Lorsqu'un choc déclenche le gonflement d'un ou plusieurs des sacs 23ᵢ, il faut évidemment que ceux-ci puissent sortir de leur logement et se déployer dans l'habitacle. Pour ce faire, il faut que les pattes de fixation 26ᵢ qui maintiennent les sacs sur la garniture soient frangibles, c'est-à-dire qu'elles puissent se déchirer pour permettre l'expansion des sacs sous la pression du gaz qui les remplit après le choc. Cette frangibilité est obtenue grâce à la ligne d'affaiblissement que constituent la ligne de pliure 28₁ (voir figure 7).

Il convient aussi de réaliser la garniture 22 en un matériau souple de manière que son bord 22' puisse se déformer en échappant à un joint de porte 38 profilé pour le retenir, et venir dans la position représentée en trait interrompu à la figure 8, sous la poussée du sac 23₁ en cours de gonflement. Il se dégage ainsi une ouverture dans laquelle le sac s'engouffre pour se déployer dans l'habitacle et y jouer son rôle de protection.

Il apparaît sur la figure 8 que le sac gonflable 23₁ s'appuie, à travers la garniture, sur la poignée selon l'invention. Le déploiement du sac 23₁ exige alors un certain basculement de la poignée, dans le sens de la flèche F₁, pour éviter une projection dangereuse de celle-ci vers les passagers, sous la poussée du sac en cours de gonflage.

Selon la présente invention, on assure ce basculement en ménageant sur les pattes 7,8 des chevilles des encoches 32,33 respectivement (voir figure 9) pour l'accrochage de l'extrémité de ces chevilles sur la tôle 17 de la poutre 37, l'une (32) des encoches étant délimitée d'un côté par deux doigts frangibles 34₁,34₂ espacés transversalement.

Sous l'effort (de l'ordre de 800 daN) que développe le sac gonflable sur la poignée lors de son déploiement, les doigts 34₁,34₂ se brisent et les chevilles basculent alors autour de l'encoche 33, dans le sens de la flèche F₁, sans que la poignée ne se détache de la poutre 37, le basculement de la cheville 2₁, par exemple, assurant son coincement dans le trou 31₁. La rupture des doigts 34₁ et 34₂ permet également d'absorber une partie de l'énergie cinétique de la garniture poussée par le sac gonflable.

Bien entendu, l'invention n'est pas limitée aux modes de réalisation décrits et représentés qui n'ont été donnés qu'à titre d'exemple. C'est ainsi qu'un ressort de rappel 35 (voir figure 1) peut maintenir l'anse 1 de la poignée dans la position escamotée représentée en trait plein à la figure 8, quand celle-ci n'est pas utilisée. C'est ainsi également que la poignée suivant l'invention pourrait servir au montage d'une garniture de toit non munie de sacs gonflables. Plus généralement encore, la poignée suivant l'invention est susceptible d'équiper tout objet tel que bagage, meuble, tiroir, etc... susceptibles d'être équipés d'une poignée articulée.

## Revendications

1. Poignée articulée, notamment pour habitacle de véhicule automobile, comprenant une anse (1) articulée sur au moins un organe de fixation de ladite anse (1) sur un support, ledit organe de fixation étant aussi apte à maintenir une garniture sur le support et étant constitué par un moyen de cheville expansible (2₁, 2₂) et un moyen de clou (3₁, 3₂) engagé dans ledit moyen de cheville (2₁, 2₂) et mobile entre une première position où il est inactif et une deuxième position où il provoque l'expansion du moyen de cheville (2₁, 2₂), l'anse (1) de ladite poignée étant agencée pour pouvoir être basculée de manière à percuter ledit moyen de clou (3₁,3₂) en faisant passer celui-ci de sa première à sa deuxième position, **caractérisée en ce que** la poignée est munie de moyens (32,33,34₁,34₂) permettant son basculement sans que ladite poignée se détache de son support lors du déploiement d'au moins un sac gonflable (23₁, 23₂) installé à proximité de la poignée entre ladite garniture (22) et un toit (21) au voisinage d'un bord latéral de la garniture (22).

2. Poignée conforme à la revendication 1, **caractérisée en ce qu'**elle comprend deux organes de fixation (2₁, 3₁ ;2₂, 3₂) articulés chacun à l'une de deux extrémités de l'anse (1), lesdits organes de fixation (2₁, 3₁ ;2₂, 3₂) comprenant des moyens (11,13,15 ;12,14,16) permettant de retenir temporairement les moyens de clou (3₁ ,3₂) dans leur première position.

3. Poignée conforme à la revendication 2, **caractérisée en ce que** lesdits moyens de retenue (11,13,15 ; 12,14,16) sont constitués par au moins un pont élastique (11, 12) formé sur le moyen de cheville, une nervure (15, 16) et une rainure (13, 14) complémentaires dont l'une est formée sur ledit pont (11, 12) et l'autre sur ledit moyen de cheville (21, 22), l'engagement de la rainure (13, 14) dans la nervure (15, 16) définissant la première position du moyen de clou.

4. Pavillon de véhicule automobile comprenant une garniture (22) fixée à proximité de la face intérieure du toit (21) du véhicule, **caractérisé en ce que** des moyens de fixation de cette garniture (22) sur ledit toit (21 sont constitués par le ou les organes de fixation d'au moins une poignée conforme à l'une quelconque des revendications 1 à 3, et au moins un sac gonflable (23₁, 23₂) est installé entre ladite garniture (22) et ledit toit (21) au voisinage d'un bord latéral de la garniture (22) ledit sac gonflable (23₁, 23₂) étant fixé sur ladite garniture (22) par au moins une patte frangible (26₁,26₂).

5. Pavillon conforme à la revendication 4, **caractérisé en ce que** ladite patte frangible (26₁,26₂) est formée d'une pièce avec ladite garniture (22) et déborde latéralement de celle-ci, au-delà d'une ligne de pliure frangible (28₁).

6. Pavillon conforme à la revendication 5, **caractérisé en ce que** ladite patte (26₁, 26₂) est rabattue sur ledit sac (23₁, 23₂) et fixée par son extrémité sur la face de la garniture (2) qui est en regard du toit (1).

7. Pavillon conforme à l'une quelconque des revendications 4 à 6, **caractérisé en ce que** ledit sac gonflable (23₁, 23₂) est plié sous une forme allongée et fixé entre le toit (21) et un bord latéral de la garniture (22), celle-ci étant déformable à ce niveau pour permettre l'expansion du sac (23₁, 23₂), hors de l'espace dans lequel il est plié, lorsqu'il se gonfle sous l'action d'un générateur de gaz (24₁, 24₂) activé par un choc.

## Claims

1. Hinged grab handle, in particular for a motor vehicle passenger compartment, comprising a hand-hold (1) hinged on at least one member for mounting the said hand-hold (1) on a support, the said mounting member also being designed to hold a lining in place on the support and being composed of an expanding peg means (2₁, 2₂) and a pin means (3₁, 3₂) engaged in the said peg means (2₁, 2₂) and able to move between a first position where it is inactive and a second position where it causes the expansion of the peg means (2₁, 2₂) , the hand-hold (1) of the said grab handle being arranged to be able to be pivoted so as to strike the said pin means (3₁, 3₂) making it pass from its first to its second position, **characterized in that** the grab handle is provided with means (32, 33, 34₁, 34₂) allowing it to pivot without the said grab handle becoming detached from its support during the deployment of at least one airbag (23₁,23₂) installed near the grab handle between the said lining (22) and a top (21) in the vicinity of a lateral edge of the lining (22).

2. Grab handle according to Claim 1, **characterized in that** it comprises two mounting members (2₁,3₁; 2₂,3₂) each hinged at one of two ends of the hand-hold (1), the said mounting members (2₁,3₁; 2₂,3₂) comprising means (11,13,15; 12,14,16) for temporarily retaining the pin means (3₁, 3₂) in their first position.

3. Grab handle according to Claim 2, **characterized in that** the said retaining means (11,13,15; 12,14,16) are composed of at least one elastic bridge (11,12) formed on the peg means, a rib (15,16) and a groove (13,14) which are complementary, of which one is formed on the said bridge (11,12) and the other on the said peg means (21,22), the engaging of the groove (13,14) with the rib (15,16) defining the first position of the pin means.

4. Motor vehicle roof comprising a lining (22) mounted near the inner side of the top (21) of the vehicle, **characterized in that** means of mounting this lining (22) on the said top (21) are composed of the mounting member(s) of at least one grab handle according to any one of Claims 1 to 3, and at least one airbag (23₁,23₂) is installed between the said lining (22) and the said top (21) in the vicinity of a lateral edge of the lining (22), the said airbag (23₁,23₂) being mounted on the said lining (22) by at least one frangible tab (26₁,26₂).

5. Roof according to Claim 4, **characterized in that** the said frangible tab (26₁, 26₂) is made in one piece with the said lining (22) and projects laterally from it, beyond a frangible fold line (28₁).

6. Roof according to Claim 5, **characterized in that** the said tab (26₁, 26₂) is folded down on the said airbag (23₁, 23₂) and mounted by its end on the side of the lining (2) which is facing the top (1).

7. Roof according to any one of Claims 4 to 6, **characterized in that** the said airbag (23₁, 23₂) is folded in an elongated shape and mounted between the top (21) and a lateral edge of the lining (22), the lining being flexible at this point to allow for the expansion of the airbag (23₁, 23₂), out from the space in which it is folded, when it inflates due to the operation of a gas generator (24₁, 24₂) activated by an impact.

## Patentansprüche

1. Schwenkgriff, insbesondere für die Fahrgastzelle eines Kraftfahrzeugs, mit einem Henkel (1), der an wenigstens einem Organ für die Befestigung des Griffs (1) an einem Träger angelenkt ist, wobei das Befestigungsorgan außerdem dazu ausgelegt ist, an dem Träger einen Beschlag zu halten, und der gebildet ist durch ein Zapfenmittel (2₁, 2₂) und ein Stiftmittel (3₁, 3₂), das in dem Zapfenmittel (2₁, 2₂) in Eingriff ist und zwischen einer ersten Position, in der es inaktiv ist, und einer zweiten Position, in der es die Ausdehnung des Zapfenmittels (2₁, 2₂) hervorruft, beweglich ist, wobei der Henkel (1) des Griffs dazu ausgelegt ist, in der Weise geschwenkt werden zu können, dass er auf das Stiftmittel (3₁, 3₂) schlägt und bewirkt, dass dieses aus seiner ersten in seine zweite Position übergeht, **dadurch gekennzeichnet, dass** der Griff mit Mitteln (32, 33, 34₁, 34₂) versehen ist, die sein Schwenken ermöglichen, ohne dass der Griff von seinem Träger gelöst wird, wenn wenigstens ein aufblasbarer Sack (23₁, 23₂), der in der Nähe des Griffs zwischen dem Beschlag (22) und einem Dach (21) in der Nähe eines Seitenrandes des Beschlags (22) installiert ist, entfaltet wird.

2. Griff nach Anspruch 1, **dadurch gekennzeichnet, dass** er zwei Befestigungsorgane (2₁, 3_{1;} 2₂, 3₂) enthält, die jeweils an einem der zwei Enden des Henkels (1) angelenkt sind, wobei die Befestigungsorgane (2₁, 3₁; 2₂, 3₂) Mittel (11, 13, 15; 12, 14, 16) aufweisen, die ermöglichen, die Stiftmittel (3₁, 3₂) vorübergehend in ihrer ersten Position zu halten.

3. Griff nach Anspruch 2, **dadurch gekennzeichnet, dass** die Haltemittel (11, 13, 15; 12, 14, 16) durch wenigstens eine elastische Brücke (11, 12), die an dem Zapfenmittel ausgebildet ist, einen Steg (15, 16) und eine Nut (13, 14), die komplementär sind und wovon eine an der Brücke (11, 12) und die andere an dem Zapfenmittel (21, 22) ausgebildet ist, gebildet sind, wobei der Eingriff der Nut (13, 14) und des Stegs (15, 16) die erste Position des Zapfenmittels definiert.

4. Kraftfahrzeugdach, das einen Beschlag (22) aufweist, der in der Nähe der Innenfläche des Dachs (21) des Fahrzeugs befestigt ist, **dadurch gekennzeichnet, dass** die Befestigungsmittel dieses Beschlags (22) am Dach (21) durch das oder die Befestigungsorgane wenigstens eines Griffs nach einem der Ansprüche 1 bis 3 gebildet sind und wenigstens ein aufblasbarer Sack (23₁, 23₂) zwischen dem Beschlag (22) und dem Dach (21) in der Nähe eines Seitenrandes des Beschlags (22) installiert ist, wobei der aufblasbare Sack (23₁, 23₂) an dem Beschlag (22) durch wenigstens eine zerbrechliche Lasche (26₁, 26₂) befestigt ist.

5. Fahrzeugdach nach Anspruch 4, **dadurch gekennzeichnet, dass** die zerbrechliche Lasche (26₁, 26₂) einteilig mit dem Beschlag (22) gebildet ist und von diesem seitlich über eine zerbrechliche Falzlinie (28₁) hinaus vorsteht.

6. Fahrzeugdach nach Anspruch 5, **dadurch gekennzeichnet, dass** die Lasche (26₁, 26₂) auf den Sack (23₁, 23₂) geklappt ist und mit ihrem Ende an der Fläche des Beschlags (2), die sich gegenüber dem Dach (1) befindet, befestigt ist.

7. Fahrzeugdach nach einem der Ansprüche 4 bis 6, **dadurch gekennzeichnet, dass** der aufblasbare Sack (23₁, 23₂) in eine lang gestreckte Form gefaltet ist und zwischen dem Dach (21) und einem seitlichen Rand des Beschlags (22) befestigt ist, wobei dieser auf dieser Höhe verformbar ist, um die Ausdehnung des Sacks (23₁, 23₂) aus dem Raum, in dem er zusammengefaltet ist, zu ermöglichen, wenn er sich unter der Wirkung eines durch einen Stoß aktivierten Gasgenerators (24₁, 24₂) aufbläst.
